# EUROPÄISCHE PATENTSCHRIFT

(11) **EP 1 351 042 B1**
(45) Veröffentlichungstag und Bekanntmachung des Hinweises auf die Patenterteilung: **15.12.2004**
(21) Anmeldenummer: 02010795.9
(22) Anmeldetag: 15.05.2002
(51) Int. Cl.: G01J 3/26, G01J 3/32

(54) **Verfahren und Vorrichtung zum Messen eines optischen Spektrums**
Method and device for measurement of an optical spectrum
Méthode et dispositif de mesure d'un spectre optique

(43) Veröffentlichungstag der Anmeldung: 08.10.2003
(73) Patentinhaber: Acterna Germany GmbH, 72800 Eningen (DE)
(72) Erfinder: Löcklin, Eberhard, 72766 Reutlingen (DE); Fuhrmann, Thomas, 72800 Eningen (DE)
(74) Vertreter: Kohler Schmid Möbus

(56) Entgegenhaltungen:
- EP-A- 0 638 788

## Beschreibung

Die Erfindung betrifft ein Verfahren und eine Vorrichtung zum Messen eines optischen Spektrums.

Bekannte Messverfahren verwenden ein abstimmbares breitbandiges und ein abstimmbares schmalbandiges optisches Filter. Beim Durchstimmen der beiden Filter über einen zu messenden Wellenlängenbereich wird versucht, die Mittenwellenlängen der beiden Filter jeweils zur Übereinstimmung zu bringen. Für die Synchronisation der Mittenwellenlängen der beiden Filter ist ein erheblicher Steuerungsaufwand erforderlich.

Aus der EP-A-0 638 788 ist die Hintereinander-Schaltung von zwei abstimmbaren Filtern, nämlich einem verkippten Interferenzfilter und einem Fabry-Perot-Etalon, bekannt. Die beiden Filter werden synchron miteinander verstimmt, so dass vom Prinzip her ein einziges optisches Filter mit verbesserter Durchlasscharacteristik entsteht. Das optisches Spektrum wird sowohl mit dem ersten als auch dem zweiten abstimmbaren Filter simultan gescannt, so dass ihre Mittenfrequenzen übereinstimmen. Für jede Wellenlängen wird also ein Messpunkt aufgenommen und das optische Spektrum aus den einzelnen Messpunkten zusammengesetzt. Da das Fabry-Perot-Filter einen sehr begrenzten freien Spektralbereich hat, werden mehrere Spektren bei unterschiedlichen Filteranordnungen des Fabry-Perot-Filters aufgenommen und praktisch bündig aneinander gesetzt. Für jede Wellenlängen wird bei diesem Verfahren also nur ein einziger Messpunkt aufgenommen.

Der Erfindung liegt demgegenüber die Aufgabe zugrunde, ein Verfahren und eine Vorrichtung zum Messen eines optischen Spektrums mit möglichst geringem Steuerungsaufwand zu realisieren.

Diese Aufgabe wird erfindungsgemäß durch ein Verfahren mit folgenden Verfahrensschritten gelöst:
Durchstimmen eines abstimmbaren breitbandigen optischen Filters über den vorbestimmten Wellenlängenbereich mit hoher Genauigkeit seiner jeweiligen Mittenwellenlänge,
Durchstimmen eines in Reihe mit dem breitbandigen Filter geschalteten, abstimmbaren schmalbandigen optischen Filters über den vorbestimmten Wellenlängenbereich bei jeweils unterschiedlichen Mittenwellenlängen des breitbandigen Filters und gleichzeitiges Messen der zugehörigen optischen Spektren,
Auffinden desjenigen einen Intensitätswerts in jedem gemessenen Spektrum, der jeweils bei einer Wellenlänge die maximale Intensität aller gemessenen Spektren hat, und
Zusammensetzen aller aufgefundenen Intensitätswerte über die jeweils zugehörige Mittenwellenlänge ihrer gemessenen Spektren zu einem Ausgangsspektrum.

Zu dem mit hoher Genauigkeit abstimmbaren Filter mit großer Bandbreite wird ein zweites Filter mit kleiner Bandbreite in Reihe geschaltet. Erfindungsgemäß wird nicht versucht, die Mittenwellenlänge der beiden Filter zur Übereinstimmung zu bringen, sondern die Mittenwellenlänge des schmalbandigen Filters wird lediglich mit erheblich höherer Geschwindigkeit als die des breitbandigen Filters über den vorbestimmten Wellenlängenbereich gewobbelt. Die Kenntnis der Lage der Mittenfrequenz des schmalbandigen Filters ist nicht erforderlich, so dass ein sehr einfaches Filter verwendet werden kann.

Die hohe Genauigkeit der Mittenwellenlänge des breitbandigen Filters kann durch verschiedene Verfahren erreicht werden, z.B. konstruktiv durch genaue Einstellung, durch messtechnische Erfassung des Drehwinkels eines Gitters, durch messtechnische Erfassung des Plattenabstandes eines Etalons, durch Vergleich mit einem bestimmten Spektrum etc. Insbesondere kann während des Durchstimmens des breitbandigen Filters gleichzeitig seine jeweilige Mittenwellenlänge gemessen werden.

Das Ausgangsspektrum wird rechnerisch aus den gemessenen optischen Spektren mehrerer Durchläufe des schmalbandigen Filters zusammengesetzt. Dabei werden die Spektrallinien des zu messenden Eingangsspektrums mit der hohen Auflösung des schmalbandigen Filters getrennt und ihre Wellenlänge mit der Genauigkeit des breitbandigen Filters festgestellt.

Die Erfindung ermöglicht die Steigerung des Auflösungsvermögens eines breitbandigen optischen Filters durch Hinzufügen eines schmalbandigen optischen Filters ohne gegenseitige Synchronisation. Dadurch kann ein sehr einfaches schmalbandiges Filter verwendet werden. Der Steuerungsaufwand ist minimal.

Während das breitbandige Filter genau eingestellt wird, braucht die genaue Mittenwellenlänge des schmalbandigen Filters zu keiner Zeit bekannt zu sein. Es sind daher einfache Ausführungsformen wie z.B. rotierende oder schwingende dispersive Elemente, schwingende oder frei verstimmte Fabry-Perot-Resonatoren, Fiber-Bragg-Grating-(FBG)-Filter oder andere Anordnungen geeignet.

Vorteilhaft ist auch, dass das schmalbandige Filter mehrdeutig sein darf, sofern nur der Abstand der Durchlassbereiche verschiedener Ordnungen so groß ist, dass das breitbandige Filter eine ausreichend große Unterdrückung der weiteren Ordnungen hat. Ein weiterer Vorteil ist, dass rotierende oder bei einer Eigenresonanz schwingende Filter sehr energiesparend angetrieben werden können.

In einer Verfahrensvariante wird das breitbandige Filter schrittweise über den vorbestimmten Wellenlängenbereich durchgestimmt. Diese schrittweise Abstimmung kann auch durch die Auswahl eines Filterpfades aus einer Anzahl paralleler Pfade erfolgen, z.B. durch Umschaltung eines festen Multiplexers. Auch die Verwendung eines Spektrometers vor einer digitalen Kamera entspricht dem Umschalten von Pixel zu Pixel. Vorteil der schrittweisen Abtastung ist, dass geringere Anforderungen an die Geschwindigkeit des schmalbandigen Filters und des darauf folgenden Empfängers gestellt werden.

In einer anderen Verfahrensvariante wird das breitbandige Filter kontinuierlich über den vorbestimmten Wellenlängenbereich durchgestimmt.

Während das breitbandige Filter den vorbestimmten Wellenlängenbereich nur einmal durchlaufen muss, wird das schmalbandige Filter vorteilhaft periodisch verstimmt.

Es ist auch eine Anordnung möglich, bei der das schmalbandige Filter mehrdeutig ist und schrittweise abgetastet wird, z.B. durch eine Kamera hinter einem periodischen Spektrometer. Eine Ausführungsform ist beispielsweise die Anordnung einer CCD-Kamera hinter einem phased array.

Die oben genannte Aufgabe wird erfindungsgemäß auch gelöst durch eine Vorrichtung mit einem abstimmbaren, breitbandigen optischen Filter und einem abstimmbaren, schmalbandigen optischen Filter, die beide in Reihe geschaltet sind, mit einem nachgeschalteten Detektor und mit einer Auswerteeinrichtung zum Auffinden desjenigen Intensitätswerts in jedem gemessenen optischen Spektrum, der jeweils bei einer Wellenlänge die maximale Intensität aller gemessenen Spektren hat, und zum Zusammensetzen aller aufgefundenen Intensitätswerte über die jeweils zugehörige Mittenwellenlänge ihrer gemessenen Spektren zu einem Ausgangsspektrum.

Bei bevorzugten Ausführungsformen der erfindungsgemäßen Vorrichtung ist die Geschwindigkeit, mit welcher das schmalbandige Filter periodisch über einen vorbestimmten Wellenlängenbereich durchgestimmt wird, erheblich höher als die Geschwindigkeit, mit welcher das breitbandige Filter periodisch über den vorbestimmten Wellenlängenbereich durchgestimmt wird. Die Geschwindigkeiten hängen vom vorbestimmten Wellenlängenbereich, von der zur Verfügung stehenden Zeit, von der gewünschten Auflösung und vom Eindeutigkeitsbereich des schmalbandigen Filters ab. Soll z.B. ein Spektralbereich von 100 nm in 10 s mit einer Auflösung von 0,01 nm gemessen werden und ist das schmalbandige Filter ebenfalls eindeutig über 100 nm, so muss die Geschwindigkeit des breitbandigen Filters 10nm/s und die des schmalbandigen Filters >100000nm/s sein.

Vorzugsweise hat das breitbandige Filter eine im vorbestimmten Wellenlängenbereich eindeutige und das schmalbandige Filter eine periodische Filtercharakteristik. Das breitbandige Filter kann z.B. ein Gittermonochromator und das schmalbandige Filter z.B. ein Fabry-Perot-Filter sein. Die Verwendung eines mehrdeutigen schmalbandigen Filters erlaubt eine sehr viel niedrigere Geschwindigkeit, weil das schmalbandige Filter nicht über den gesamten vorbestimmten Wellenlängenbereich verstimmt werden muss. Diese geringere Geschwindigkeit kommt der Empfindlichkeit der Vorrichtung zugute.

Das schmalbandige Filter kann hinter oder vor dem breitbandigen Filter angeordnet sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch die wesentlichen Teile der erfindungsgemäßen Messvorrichtung;
- Fign. 2a-2e: mit der Messvorrichtung der Fig. 1 gemessene optische Spektren mehrerer Durchläufe des schmalbandigen Filters bei jeweils unterschiedlichen Mittenwellenlängen des breitbandigen Filters am Beispiel eines optischen Spektrums mit zwei Spektrallinien;
- Fig. 3: das aus den gemessenen Spektren der Fig. 2 zusammengesetzte optische Ausgangsspektrum.

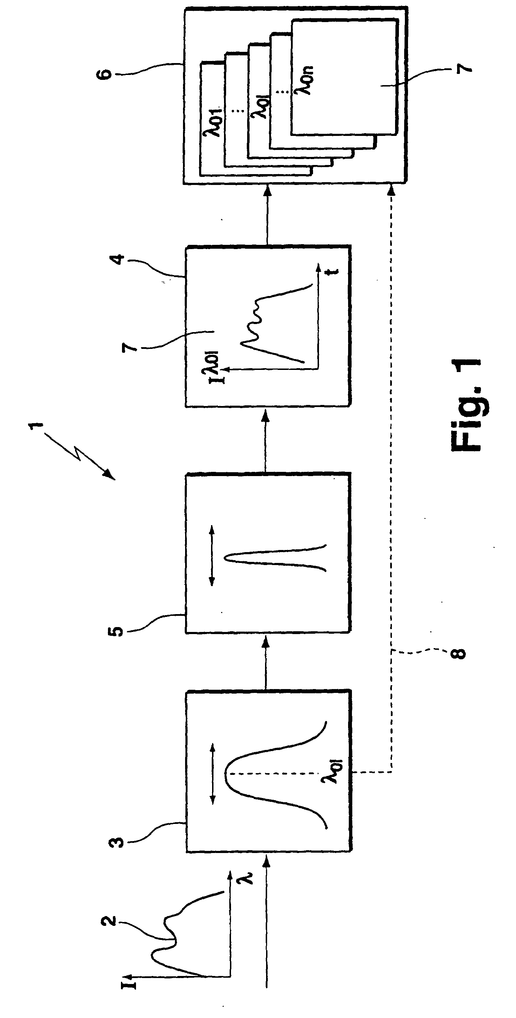

Die in **Fig. 1** gezeigte Vorrichtung **1** dient zum Messen eines optischen Spektrums **2** und umfasst ein mit hoher Genauigkeit abstimmbares, breitbandiges optisches Filter **3**, einen z.B. als Photodiode ausgebildeten Detektor **4** und ein zwischengeschaltetes, abstimmbares schmalbandiges optisches Filter **5**. Beide Filter 3, 5 werden über den gleichen Messwellenlängenbereich periodisch durchgestimmt, wobei die Mittenwellenlänge des schmalbandigen Filters 5 mit erheblich höherer Geschwindigkeit als die Mittenwellenlänge λ₀ des breitbandigen Filters 3 über den Messwellenlängenbereich gewobbelt wird. Das gemessene Ausgangsspektrum wird mittels einer Auswerteeinrichtung **6** aus den gemessenen optischen Spektren **7** mehrerer Durchläufe des schmalbandigen Filters 5 bei n unterschiedlichen Mittenwellenlängen λ₀= λ₀ᵢ (i= 1,...,n) des breitbandigen Filters 3 rechnerisch zusammengesetzt. Die jeweilige Mittenwellenlänge λ₀ᵢ des breitbandigen Filters 3 wird mit einer nicht gezeigten Einrichtung eingestellt oder gemessen und zusammen mit dem zugehörigen Spektrum 7 an die Auswerteeinrichtung 6 geliefert, wie in Fig. 1 durch die gestrichelte Linie **8** angedeutet ist.

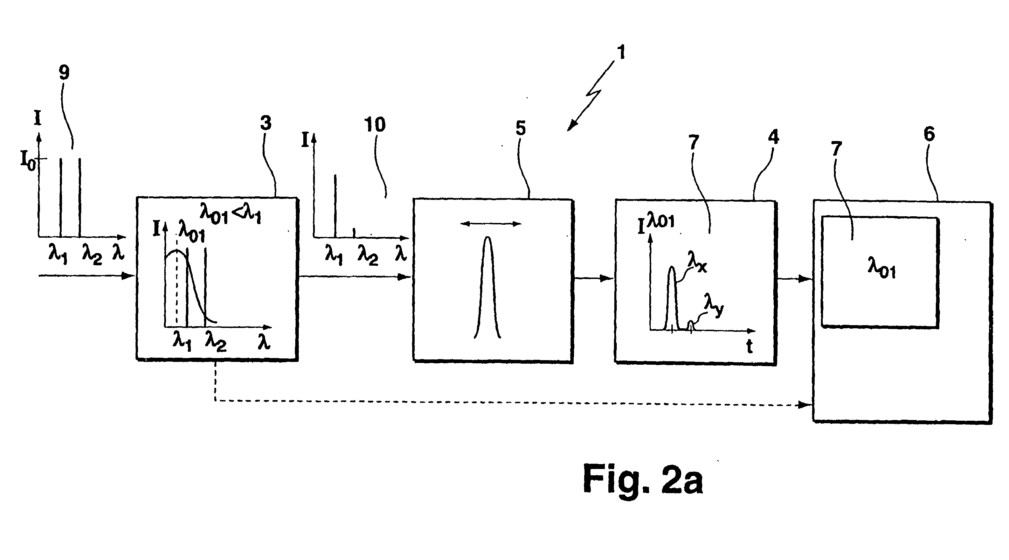

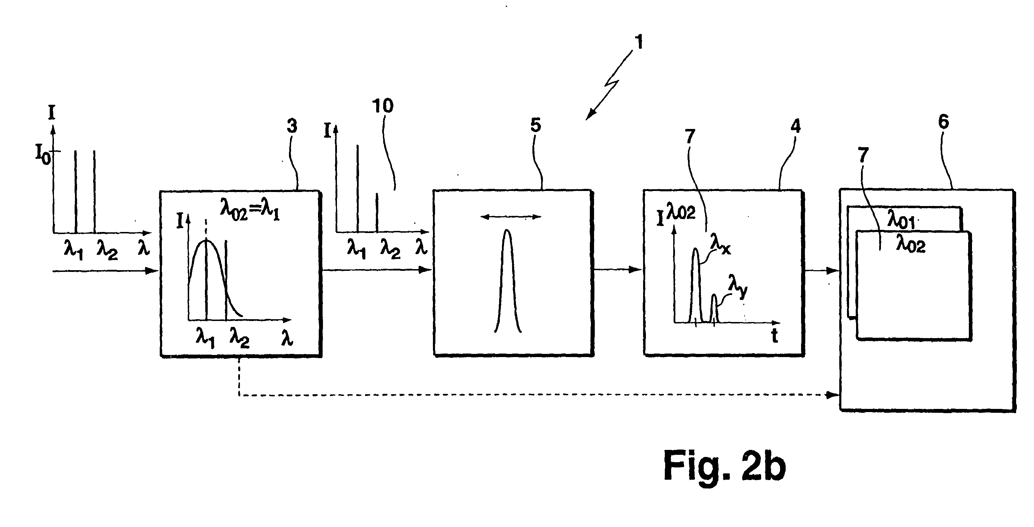

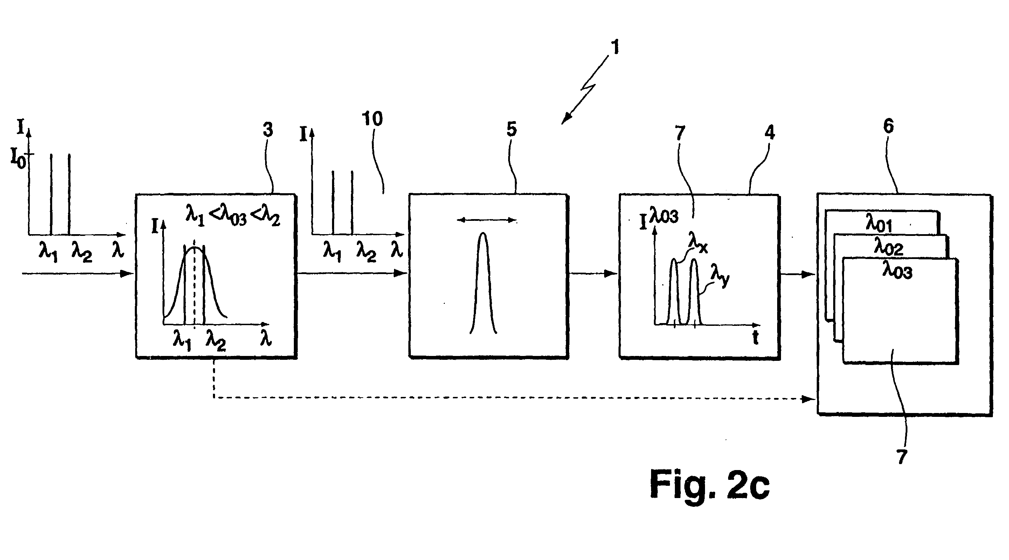

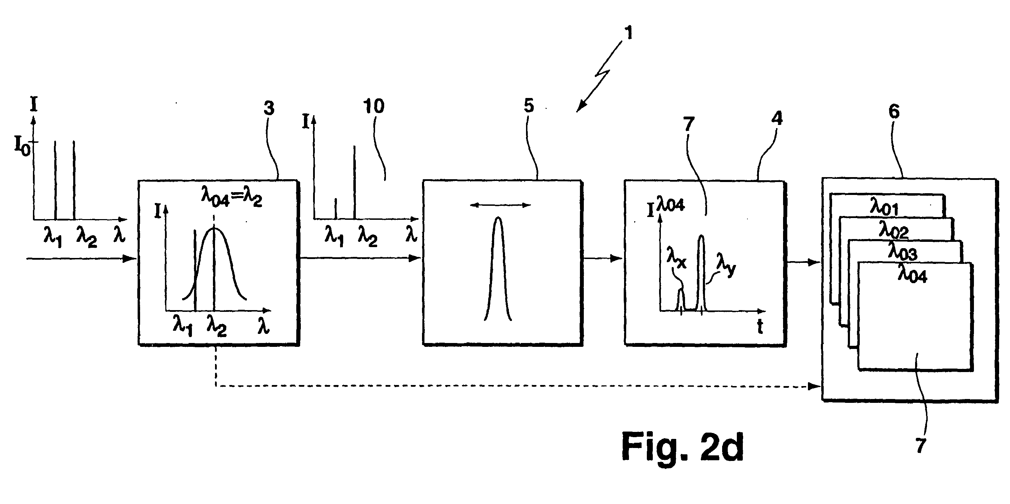

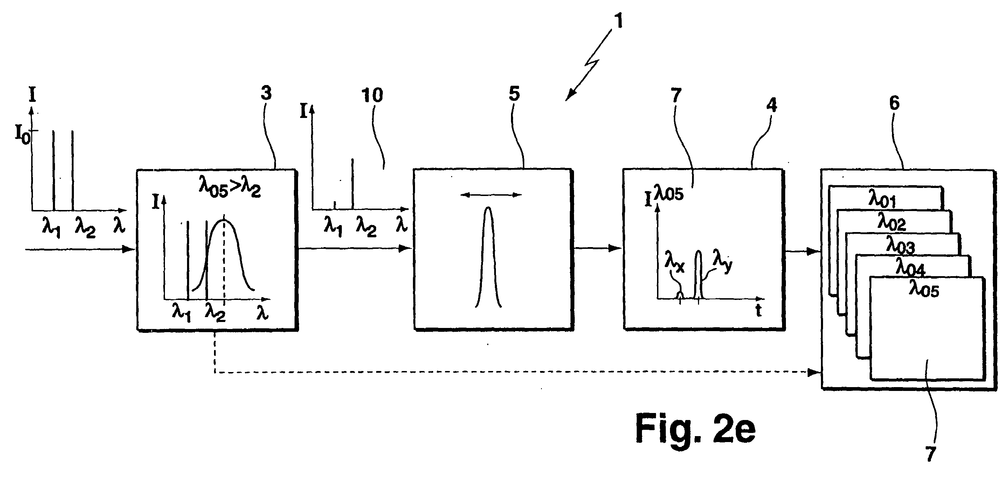

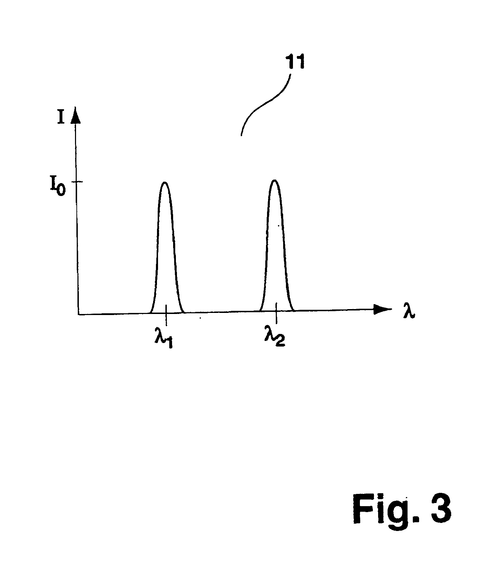

In **Fig. 2** und **Fig. 3** werden die einzelnen Verfahrensschritte des mit der Vorrichtung 1 durchgeführten Messverfahrens am Beispiel eines zu messenden optischen Spektrums **9** mit nur zwei Spektrallinien λ₁, λ₂ (λ₁ < λ₂) gleicher Intensität I₀ beschrieben:

In **Fig. 2a** ist die Mittenwellenlänge λ₀ des breitbandigen Filters 3 auf eine Wellenlänge λ₀₁ (λ₀₁ < λ₁) eingestellt, so dass am Ausgang **10** des breitbandigen Filters 3 die beiden Spektrallinien λ₁, λ₂ in ihrer Intensität entsprechend der Filterkurvenflanke des breitbandigen Filters 3 reduziert sind. Das schmalbandige Filter 5 wird bei der eingestellten Mittenwellenlänge λ₀₁ einmal über den Messwellenlängenbereich durchgestimmt und gleichzeitig mit dem Detektor 4 das zugehörige optische Spektrum 7 gemessen, welches dann in der Auswerteeinrichtung 6 als I^{λ01}(t)-Spektrum gespeichert wird.

In **Fig. 2b** ist die Mittenwellenlänge λ₀ des breitbandigen Filters 3 auf die Wellenlänge λ₀₂ = λ₁ eingestellt, so dass am Ausgang 10 des breitbandigen Filters 3 die Spektrallinie λ₁ maximal durchgelassen und die Spektrallinie λ₂ in ihrer Intensität entsprechend der Filterkurvenflanke des breitbandigen Filters 3 reduziert ist. Das schmalbandige Filter 5 wird bei der eingestellten Mittenwellenlänge λ₀₂ einmal über den Messwellenlängenbereich durchgestimmt und gleichzeitig mit dem Detektor 4 das zugehörige optische Spektrum 7 gemessen, welches dann in der Auswerteeinrichtung 6 als I^{λ02}(t)-Spektrum gespeichert wird.

In **Fig. 2c** ist die Mittenwellenlänge λ₀ des breitbandigen Filters 3 auf eine Wellenlänge λ₀₃ (λ₁ < λ₀₃ < λ₂) eingestellt, so dass am Ausgang 10 des breitbandigen Filters 3 beide Spektrallinien λ₁, λ₂ in ihrer Intensität entsprechend den Filterkurvenflanken des breitbandigen Filters 3 reduziert sind. Das schmalbandige Filter 5 wird bei der eingestellten Mittenwellenlänge λ₀₃ einmal über den Messwellenlängenbereich durchgestimmt und gleichzeitig mit dem Detektor 4 das zugehörige optische Spektrum 7 gemessen, welches dann in der Auswerteeinrichtung 6 als I^{λ03}(t)-Spektrum gespeichert wird.

In **Fig. 2d** ist die Mittenwellenlänge λ₀₄ des breitbandigen Filters 3 auf die Wellenlänge λ₀₄ = λ₂ eingestellt, so dass am Ausgang 10 des breitbandigen Filters 3 die Spektrallinie λ₂ maximal durchgelassen und die Spektrallinie λ₁ in ihrer Intensität entsprechend der Filterkurvenflanke des breitbandigen Filters 3 reduziert ist. Das schmalbandige Filter 5 wird bei der eingestellten Mittenwellenlänge λ₀₄ einmal über den Messwellenlängenbereich durchgestimmt und gleichzeitig mit dem Detektor 4 das zugehörige optische Spektrum 7 gemessen, welches dann in der Auswerteeinrichtung 6 als I^{λ04}(t)-Spektrum gespeichert wird.

In **Fig. 2e** ist die Mittenwellenlänge λ₀₅ des breitbandigen Filters 3 auf eine Wellenlänge λ₀₅ > λ₂ eingestellt, so dass am Ausgang 10 des breitbandigen Filters 3 beide Spektrallinien λ₁, λ₂ in ihrer Intensität entsprechend der Filterkurvenflanke des breitbandigen Filters 3 reduziert sind. Das schmalbandige Filter 5 wird bei der eingestellten Mittenwellenlänge λ₀₅ einmal über den Messwellenlängenbereich durchgestimmt und gleichzeitig mit dem Detektor 4 das zugehörige optische Spektrum 7 gemessen, welches dann in der Auswerteeinrichtung 6 als I^{λ05}(t)-Spektrum gespeichert wird.

Nachfolgend wird in der Auswerteeinrichtung 6 durch Vergleich aller gemessenen I^{λ0i}(t)-Spektren 7 (i= 1,...,n) in jedem gemessenen Spektrum 7 derjenige eine Intensitätswert, der jeweils für eine Wellenlänge das absolute Intensitätsmaximum aller n gemessenen Spektren 7 bildet, ermittelt und der Mittenwellenlänge λ₀ᵢ (i= 1,...,n) des zugehörigen i.ten gemessenen Spektrums 7 zugeordnet. Durch Zusammensetzen aller so ermittelten maximalen Intensitätswerte über die Wellenlänge λ ergibt sich - bei entsprechender Berücksichtigung der Filterwerte der beiden Filter 3, 5 bei ihren Mittenwellenlängen - das Ausgangsspektrum mit der Auflösung des schmalbandigen Filters 5. In diesem Ausgangsspektrum sind die Spektrallinien des Eingangspektrums 2 mit der hohen Auflösung des schmalbandigen Filters 5 getrennt und ihre Wellenlängen mit der Genauigkeit des breitbandigen Filters 3 bestimmt.

Im oben geschilderten Beispiel haben das bei λ₀₂ = λ₁ gemessene I^{λ02}(t)-Spektrum 7 bei der Wellenlänge λ_{X} und das bei λ₀₄ = λ₂ gemessene Ausgangsspektrum bei der Wellenlänge λ_{Y} jeweils die maximalen Intensitätswerte I^{λ02}(λ_{X}) bzw. I^{λ04}(λ_{Y}) aller Ausgangsspektren 7, so dass I(λ₁) = I^{λ02}(λ_{X}) und I(λ₂) = I^{λ04}(λ_{Y}) gesetzt wird. Durch Auftragen aller so ermittelten maximalen Intensitätswerte über die Wellenlänge λ ergibt sich - bei entsprechender Berücksichtigung der Filterwerte der beiden Filter 3, 5 bei ihren Mittenwellenlängen - das in Fig. 3 gezeigte Ausgangsspektrum 11 mit den beiden Spektrallinien λ₁, λ₂ bei gleicher Intensität I₀. Die beiden Spektrallinien λ₁, λ₂ des Eingangssignals 2 sind im Ausgangsspektrum 11 mit der hohen Auflösung des schmalbandigen Filters 5 getrennt und ihre Wellenlängen mit der Genauigkeit des breitbandigen Filters 3 bestimmt.

## Patentansprüche

1. Verfahren zum Messen eines optischen Spektrums (2) innerhalb eines vorbestimmten Wellenlängenbereichs, mit folgenden Verfahrensschritten: Durchstimmen eines abstimmbaren breitbandigen optischen Filters (3) über den vorbestimmten Wellenlängenbereich mit hoher Genauigkeit seiner jeweiligen Mittenwellenlänge (λ₀),
Durchstimmen eines in Reihe mit dem breitbandigen Filter (3) geschalteten, abstimmbaren schmalbandigen optischen Filters (5) über den vorbestimmten Wellenlängenbereich bei jeweils unterschiedlichen Mittenwellenlängen (λ₀) des breitbandigen Filters (3) und gleichzeitiges Messen der zugehörigen optischen Spektren (7),
Auffinden desjenigen einen Intensitätswerts in jedem gemessenen Spektrum (7), der jeweils bei einer Wellenlänge die maximale Intensität aller gemessenen Spektren (7) hat, und
Zusammensetzen aller aufgefundenen Intensitätswerte über die jeweils zugehörige Mittenwellenlänge (λ₀) ihrer gemessenen Spektren (7) zu einem Ausgangsspektrum (11).

2. Verfahren nach Anspruch 1, **dadurch gekennzeichnet, dass** beim Durchstimmen des breitbandigen Filters (3) gleichzeitig seine Mittenwellenlänge gemessen wird.

3. Verfahren nach Anspruch 1 oder 2, **dadurch gekennzeichnet, dass** der breitbandige Filter (3) schrittweise über den vorbestimmten Wellenlängenbereich durchgestimmt wird.

4. Verfahren nach Anspruch 1 oder 2, **dadurch gekennzeichnet, dass** das breitbandige Filter (3) kontinuierlich über den vorbestimmten Wellenlängenbereich durchgestimmt wird.

5. Verfahren nach einem der vorhergehenden Ansprüche, **dadurch gekennzeichnet, dass** das breitbandige Filter (3) und/oder das schmalbandige Filter (5) periodisch über den vorbestimmten Wellenlängenbereich durchgestimmt werden.

6. Vorrichtung (1) zur Durchführung des Verfahrens nach einem der vorhergehenden Ansprüche, mit einem abstimmbaren, breitbandigen optischen Filter (3) und einem abstimmbaren, schmalbandigen optischen Filter (5), die beide in Reihe geschaltet sind, mit einem nachgeschalteten Detektor (4) und mit einer Auswerteeinrichtung (6) zum Auffinden desjenigen Intensitätswerts in jedem gemessenen optischen Spektrum (7), der jeweils bei einer Wellenlänge die maximale Intensität aller gemessenen Spektren (7) hat, und zum Zusammensetzen aller aufgefundenen Intensitätswerte über die jeweils zugehörige Mittenwellenlänge (λ₀) ihrer gemessenen Spektren (7) zu einem Ausgangsspektrum (11).

7. Vorrichtung nach Anspruch 6, **dadurch gekennzeichnet, dass** die Geschwindigkeit, mit welcher das schmalbandige Filter (5) periodisch über einen vorbestimmten Wellenlängenbereich durchgestimmt wird, höher ist als die Geschwindigkeit, mit welcher das breitbandige Filter (3) periodisch über den vorbestimmten Wellenlängenbereich durchgestimmt wird.

8. Vorrichtung nach Anspruch 6 oder 7, **dadurch gekennzeichnet, dass** das breitbandige Filter (3) eine im vorbestimmten Wellenlängenbereich eindeutige und das schmalbandige Filter (5) eine periodische Filtercharakteristik hat.

9. Vorrichtung nach einem der Ansprüche 6 bis 8, **dadurch gekennzeichnet, dass** das schmalbandige Filter (5) ein Fabry-Perot-Filter ist.

10. Vorrichtung nach einem der Ansprüche 6 bis 8 **dadurch gekennzeichnet, dass** das schmalbandige Filter (5) ein Fiber-Bragg-Grating-(FBG)-Filter ist.

## Claims

1. Method for measurement of an optical spectrum (2) within a predetermined wavelength range, having the following method steps:
tuning a tunable broadband optical filter (3) over the predetermined wavelength range with high accuracy of its respective centre wavelength (λ₀),
tuning a tunable narrow-band optical filter (5), connected in series with the broadband filter (3), over the predetermined wavelength range with in each case different centre wavelengths (λ₀) of the broadband filter and simultaneous measurement of the associated optical spectra (7),
finding that one intensity value in each measured spectrum (7) which, in each case at one wavelength, has the maximum intensity of all the measured spectra (7), and
assembling all the intensity values found via the respectively associated centre wavelength (λ₀) of their measured spectra (7) to form an output spectrum (11).

2. Method according to Claim 1, **characterized in that**, as the broadband filter (3) is tuned, its centre wavelength is measured at the same time.

3. Method according to Claim 1 or 2, **characterized in that** the broadband filter (3) is tuned step by step over the predetermined wavelength range.

4. Method according to Claim 1 or 2, **characterized in that** the broadband filter (3) is tuned continuously over the predetermined wavelength range.

5. Method according to one of the preceding claims, **characterized in that** the broadband filter (3) and/or the narrow-band filter (5) are tuned periodically over the predetermined wavelength range.

6. Device (1) for implementing the method according to one of the preceding claims, having a tunable, broadband optical filter (3) and a tunable, narrow-band optical filter (5) which are connected in series, having a detector (4) connected downstream and having an evaluation device (6) for finding that intensity value in each measured optical spectrum (7) which, in each case at one wavelength, has the maximum intensity of all the measured spectra (7), and for assembling all the intensity values found via the respective associated centre wavelength (λ₀) of their measured spectra (7) to form an output spectrum (11).

7. Device according to Claim 6, **characterized in that** the speed at which the narrow-band filter (5) is tuned periodically over a predetermined wavelength range is higher than the speed at which the broadband filter (3) is tuned periodically over the predetermined wavelength range.

8. Device according to Claim 6 or 7, **characterized in that** the broadband filter (3) has a filter characteristic which is unambiguous in the predetermined wavelength range, and the narrow-band filter (5) has a periodic filter characteristic.

9. Device according to one of Claims 6 to 8, **characterized in that** the narrow-band filter (5) is a Fabry-Perot filter.

10. Device according to one of Claims 6 to 8, **characterized in that** the narrow-band filter (5) is a fibre-Bragg-grating (FBG) filter.

## Revendications

1. Procédé de mesure d'un spectre optique (2) à l'intérieur d'une plage de longueurs d'onde prescrite, comportant les étapes suivantes:
Réglage d'un filtre optique à large bande réglable (3) sur la plage de longueurs d'onde prescrite avec une précision élevée de sa longueur d'onde centrale respective (λ₀),
Réglage d'un filtre optique à bande étroite réglable (5), monté en série avec le filtre à large bande (3) sur la plage de longueurs d'onde prescrite pour des longueurs d'onde centrales différentes respectives (λ₀) du filtre à large bande (3) et mesure simultanée des spectres optiques associés (7),
Détection d'une valeur d'intensité dans chaque spectre mesuré (7), qui possède pour une longueur d'onde l'intensité maximale de tous les spectres mesurés (7), et
Synthèse de toutes les valeurs d'intensité détectées sur les longueurs d'onde centrales associées (λ₀) de leurs spectres mesurés en un spectre de sortie (11).

2. Procédé selon la revendication 1, **caractérisé en ce que** lors du réglage du filtre à large bande (3) simultanément sa longueur d'onde centrale est mesurée.

3. Procédé selon la revendication 1 ou 2, **caractérisé en ce que** le filtre à large bande (3) est réglé pas à pas sur la plage de longueurs d'onde prescrite.

4. Procédé selon la revendication 1 ou 2, **caractérisé en ce que** le filtre à large bande (3) est réglé continüment sur la plage de longueurs d'onde prescrite.

5. Procédé selon l'une des revendications précédentes, **caractérisé en ce que** le filtre à large bande (3) est/ou le filtre à bande étroite (5) sont réglés périodiquement sur la plage de longueurs d'onde prescrite.

6. Dispositif (1) en vue de la mise en oeuvre du procédé selon l'une des revendications précédentes, équipé d'un filtre optique à large bande réglable (3) et d'un filtre optique à bande étroite réglable (5), qui sont tout deux montés en série, équipé d'un détecteur (4) monté en aval et d'un dispositif d'évaluation (6) en vue de la détection de la valeur d'intensité dans chaque spectre optique mesuré (7), qui possède respectivement pour une longueur d'onde l'intensité maximale de tous les spectres mesurés (7), et en vue de la synthèse de toutes les valeurs d'intensité détectées sur la longueur d'onde centrale associée respective (λ₀) de leurs spectres mesurés (7) en un spectre de sortie (11)

7. Dispositif selon la revendication 6, **caractérisé en ce que** la vitesse à laquelle le filtre à bande étroite (5) est réglé périodiquement sur une plage de longueurs d'onde prescrite, est supérieure à la vitesse à laquelle le filtre à large bande (3) est réglé périodiquement sur la plage de longueurs d'onde prescrite.

8. Dispositif selon la revendication 6 ou 7, **caractérisé en ce que** le filtre à large bande (3) possède dans la plage de longueurs d'onde prescrite une caractéristique de filtre unique et le filtre à bande étroite (5) une caractéristique de filtre périodique.

9. Dispositif selon l'une des revendications 6 à 8, **caractérisé en ce que** le filtre à bande étroite (5) est un filtre Fabry-Pérot.

10. Dispositif selon l'une des revendications 6 à 8 **caractérisé en ce que** le filtre à bande étroite (5) est un filtre à réseau de Bragg à fibre (FBG).
